(19) Europäisches Patentamt

European Patent Office

Office européen des brevets

(11) **EP 0 986 192 A2**

(12) **EUROPEAN PATENT APPLICATION**

(43) Date of publication:
**15.03.2000 Bulletin 2000/11**

(51) Int. Cl.⁷: **H04B 7/005**

(21) Application number: **99114627.5**

(22) Date of filing: **26.07.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **07.09.1998 JP 25299198**

(71) Applicant:
**Matsushita Electric Industrial Co., Ltd.
Kadoma-shi, Osaka 571-8501 (JP)**

(72) Inventors:
• **Ue, Toyoki
Yokosuka-shi, Kanagawa 239-0847 (JP)**

• **Kitade, Takashi
Yokosuka-shi, Kanagawa 239-0847 (JP)**
• **Miya, Kazuyuki
Kawasaki-shi, Kanagawa 215-0021 (JP)**
• **Uesugi, Mitsuru
Yokosuka-shi, Kanagawa 238-0048 (JP)**
• **Kato, Osamu
Yokosuka-shi, Kanagawa 237-0066 (JP)**

(74) Representative:
**Grünecker, Kinkeldey,
Stockmair & Schwanhäusser
Anwaltssozietät
Maximilianstrasse 58
80538 München (DE)**

(54) **Mobile station communication apparatus, base station communication apparatus and radio communication method for transmission power control**

(57)    A mobile station apparatus performs a communication in a CDMA/TDD system with TDMA structure with a base station apparatus using a subframe having a plurality of slots, and monitors a broadcast channel signal. The mobile station apparatus further measures a quality of the broadcast channel signal received immediately before transmitting a traffic channel signal in reverse link, and based on the measurement result, controls transmission power in reverse link.

FIG.4

EP 0 986 192 A2

## Description

BACKGROUND OF THE INVENTION

Field of the Invention

The present invention relates to a mobile station communication apparatus, a base station communication apparatus and a radio communication method which are used in digital radio communication.

Description of the Related Art

In digital radio communications, as circuit-switching systems for a plurality of mobile station apparatuses to concurrently communicate in the same frequency band, multiple access communication systems have been applied, examples of which are Time Division Multiple Access (TDMA) and Code Division Multiple Access (CDMA). In the use of TDMA techniques, multiple access communications are performed by transmitting and receiving assigned slots to which information signals are divided. In the use of CDMA techniques, multiple access communications are performed using spread spectrum communications in which information signals are spread over a broad frequency band to transmit, as compared to original frequency band, using a Direct Spreading (DS) system. In the use of DS techniques, information signals are multiplied by a spreading code.

On the other hand, in radio communications, duplex systems such as Frequency Division Duplex (FDD) system and Time Division Duplex system have been applied conventionally for the purpose of improving communication efficiencies. For example, in the TDD system which is also called Ping-Pong system, communications are performed by dividing transmission time and reception time in the same radio frequency band.

In the case of the TDD system, since the same frequency band is used for transmission and reception, fading variations of transmitted signals and received signals are the same ( frequency correlation characteristic of fading variations is 1). In addition, when transmission and reception are switched shortly enough, since fading variations of transmitted signals and received signals are almost the same (time correlation characteristic of fading variations is high), it is possible to perform in a mobile station apparatus transmission power control using a received power level (hereinafter, also referred to as received level) from a base station apparatus , which is called open-loop power control. Further, in the case where a base station apparatus has a plurality of antennas, the base station may apply transmission diversity in which optimal antennas are selected corresponding to the received level at each antenna. In this case, the mobile station apparatus does not need to perform space diversity, thereby enabling the mobile station apparatus to be miniaturized.

In specific applications, the multiple access communication system such as TDMA and CDMA and the communication system such as FDD and TDD are combined. In particular, a CDMA/TDD system is considered to be used widely in future, because this system is capable of efficiently increasing the number of system users.

As transmission power control in this CDMA/TDD system, open-loop power control may be used. When reverse and forward link communications are performed by the open-loop power control, a reference for controlling one link is changed by controlling another link. In other words, the transmission power control is affected by a variation of received signal level due to, for example, fading, and therefore resulting in the inconvenience that the transmission power control is often unstable.

Therefore, with respect to the CDMA/TDD system, as disclosed in Japanese Patent Application H7-221700, there has been proposed the method in which a base station apparatus transmits a pilot signal of which power level is known as constant, and based on the pilot signal, a mobile station apparatus performs transmission power control with higher accuracy.

In addition, the introduction of TDMA structure to the communication method in the above-mentioned CDMA/TDD system has been proposed in order to decrease interference in the system. Further, in such a communication method of CDMA/TDD system with TDMA structure, there has been proposed the use of control channel called broadcast channel or perch channel (hereinafter referred to as broadcast channel) including transmission power control information and other information. In this case, a pilot channel signal which is transmitted in known constant power is not present, and an interval of reverse link slot and forward link slot is sometimes long depending on a subframe configuration due to TDMA structure. Therefore, it is not possible to apply the transmission power control disclosed in the above-mentioned application directly, thus remaining the problem that transmission power control and base station transmission diversity are not performed properly. Such a problem is actualized in a system applying asymmetry transmission system in which the number of forward link slots and that of reverse link slots are different. This problem is explained specifically below.

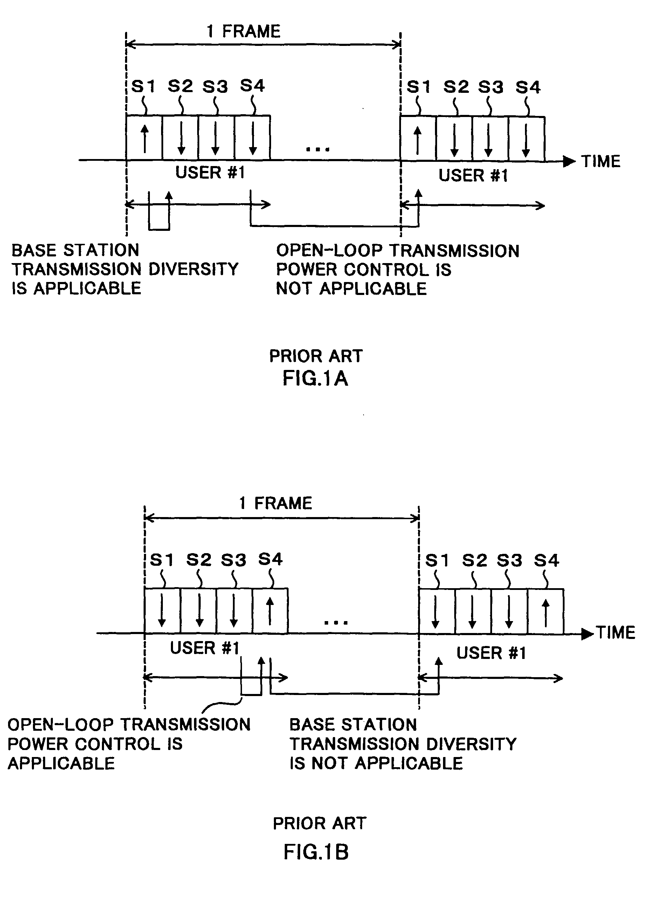

FIG.1A and FIG.1B are frame structure diagrams in the case where each user performs asymmetry transmission using four slots of one reverse slot and three forward slots in the CDMA/TDD system with TDMA structure. FIG. 1A illustrates a frame structure composed of one reverse slot (S1) and three forward slots (S2 to S4) in this order. FIG.1B illustrates a frame structure composed of three forward slots (S1 to S3) and one reverse slot (S4) in this order.

In the case of the frame structure as illustrated in FIG.1A, since forward slot S2 is present next to reverse slot S1, base station transmission diversity and transmission power control are effectively performed using a received level of reverse link signal. However, in the CDMA/TDD system with TDMA structure, since the base station apparatus communicates with a plurality of users assigning slots in one frame, an interval of forward link S4 and following reverse link S1 becomes long. In other words, a delay corresponding to a plurality of slots occurs until next transmission after measuring a received level of forward link signal to reflect in the next transmission, and therefore, the performance deteriorates largely when fading varies rapidly, and accuracy of open-loop power control in the mobile station is lowered.

On the other hand, in the case of the frame structure as illustrated in FIG. 1B, since forward slot S3 is present next to reverse link slot S4, open-loop power control is performed effectively using a received level of forward link signal. However, since an interval between reverse slot S4 and following forward slot S1 becomes long, base station transmission diversity and accuracy of transmission power control deteriorate.

SUMMARY OF THE INVENTION

An object of the present invention is to provide a mobile station communication apparatus, a base station communication apparatus and a radio communication method which do not lower performances of transmission power control and base station transmission diversity in a communication method of a CDMA/TDD system with TDMA structure in which communications are performed using a subframe, having a plurality of slots, as a unit.

In order to achieve the above-mentioned object, according to the present invention, in a CDMA/TDD system with TDMA structure communication system using a subframe having a plurality of slots, a mobile station measures a quality of a broadcast channel signal in forward link received immediately before transmitting a traffic channel signal in reverse link, and based on the measurement result, controls transmission power in reverse link. While, based on TPC information received from the mobile station apparatus or appropriately corrected reverse link signal, a base station apparatus performs transmission diversity and transmission power control in forward link.

BRIEF DESCRIPTION OF THE DRAWINGS

The above and other objects and features of the invention will appear more fully hereinafter from a consideration of the following description taken in connection with the accompanying drawing wherein one example is illustrated by way of example, in which;

FIG.1A and 1B are frame configuration diagrams in a conventional CDMA/TDD system with TDMA structure;

FIG.2 is a block diagram illustrating a configuration of a mobile station apparatus in a communication system using a radio communication apparatus according to an embodiment of the present invention;

FIG.3 is a block diagram illustrating a configuration of a base station apparatus according to the above embodiment;

FIG.4 is a frame configuration diagram used in the communication system according to the above embodiment; and

FIG.5 is a block diagram illustrating a configuration of another base station apparatus according to the above embodiment.

DETAILED DESCRIPTION OF THE PREFERRED EMBODIMENTS

Communication apparatuses according to an embodiment of the present invention will be described in the following with reference to accompanying drawings.

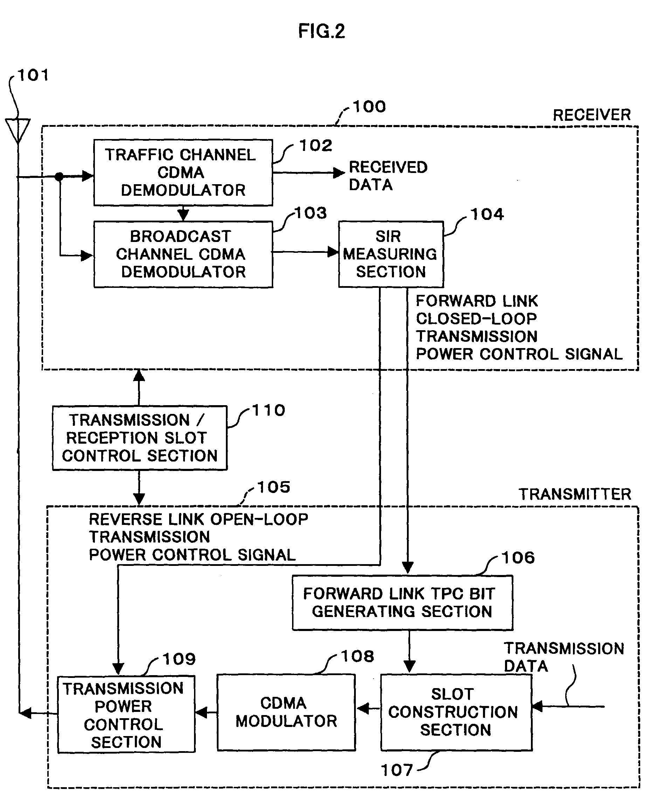

FIG.2 is a block diagram illustrating a configuration of a mobile station apparatus in a communication system using a radio communication apparatus according to the embodiment of the present invention. This mobile station apparatus is principally composed of one or a plurality of antennas 101, receiver 100, transmitter 105 and transmission/reception slot control section 110.

Receiver 100 has traffic channel CDMA demodulator 102, broadcast channel CDMA demodulator 103, and SIR(Signal Interference Ratio) measuring section 104. Transmitter 105 has forward link TPC bit generating section 106, slot construction section 107, CDMA modulator 108, and transmission power control section 109. Transmission/reception slot control section 110 controls receiver 100, transmitter 105 and transmission/reception slots.

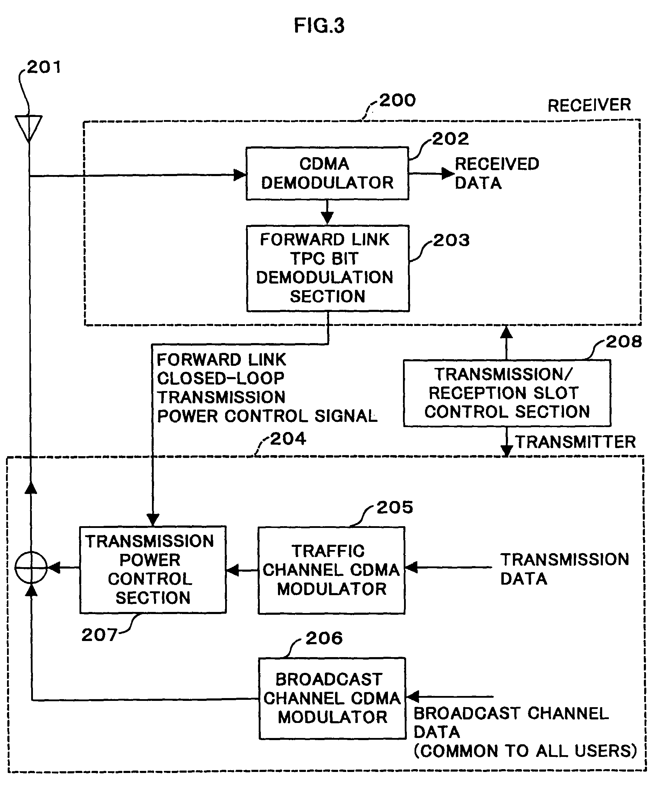

FIG.3 is a block diagram illustrating a configuration of a base station apparatus in a communication system using the radio communication apparatus according to the embodiment of the present invention. This base station apparatus is principally composed of antenna 201, receiver 200, transmitter 204, and transmission/reception slots control section 208.

Receiver 200 has CDMA demodulator 202 and forward link TPC bit demodulation section 203. Transmitter 204 has traffic channel CDMA modulator 205, broadcast channel CDMA modulator 206 (common to all users), and transmission power control section 207. Transmission/reception slot control section 208 controls receiver 200, transmitter 204 and transmission/reception slots.

Operations in the communication system with the mobile station and base station each having the above-described configuration will be described next.

A received signal received at antenna 101 at a mobile station apparatus side is adjusted at transmission/reception slot control section 110, and input to traffic channel CDMA demodulator 102 and broadcast channel CDMA demodulator 103. Traffic channel CDMA demodulator 102 demodulates received data. Broadcast channel CDMA demodulator 103 demodulates forward link transmission power control information and reverse link interference power information which are inserted to a broadcast channel, while outputs the demodulated signal to SIR measuring section 104. Based on the input signal, SIR measuring section 104 measures a reception quality to recognize channel condition. SIR measuring section 104 further outputs the measurement result to forward link TPC bit generating section 106 and transmission power control section 109 in the transmitter. This SIR measurement result is used for forward link closed-loop transmission power control at forward link TPC bit generating section 106, while used for reverse link open-loop transmission power control at transmission power control section 109. In other words, based on the input SIR measurement result, forward link TPC bit generating section 106 generates forward link TPC bit to be transmitted to the base station apparatus so as to output to slot construction section 107. Further, based on the SIR measurement result, transmission power control section 109 performs transmission power control.

Slot construction section 107 sequentially constructs slots of reverse link transmission data, while inserts a TPC bit input from forward link TPC bit generating section 106 to a specific slot. The transmission data subjected to such a slot construction is modulated at CDMA modulator 108, and transmitted in transmission power control section 109 at the power corresponding to the measurement result input from SIR measuring section 104.

On the other hand, a received signal received at antenna 201 at a base station apparatus side is adjusted at transmission/reception slot control section 208, and input to CDMA demodulator 202 to demodulate received data. Forward link TPC bit demodulation section 203 demodulates forward link TPC bit inserted to the received signal to output to transmission power control section 207.

Forward link transmission data is demodulated at traffic channel CDMA modulator 205, and transmitted at transmission power control section 207 at transmission power level determined by the received forward link TPC bit. Broadcast channel CDMA modulator 206 concurrently modulates data to be transmitted in a broadcast channel. The broadcast channel is a channel used commonly to all users in the same frequency band as in a traffic channel and with different spreading code from that of the traffic channel. The data subjected to the CDMA modulation is transmitted from antenna 201. In addition, broadcast channel signals are transmitted at almost constant power and not subjected to transmission power control.

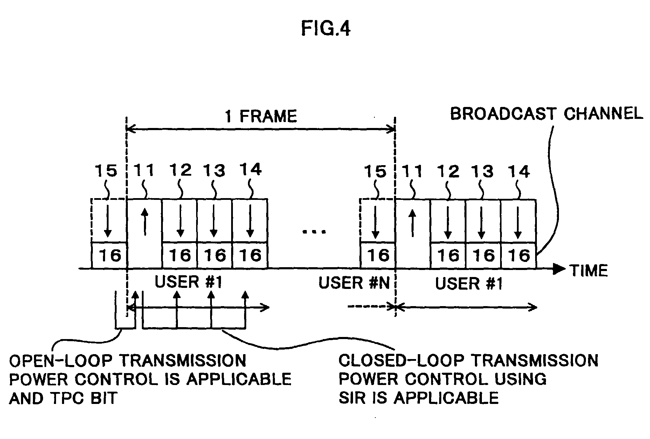

With respect to transmission power control performed in the communication system configured as descried above, a detailed description is given below using a frame configuration diagram illustrated in FIG.4. FIG.4 illustrates an example of an asymmetry transmission system in which one frame has four subframes each having four slots of one reverse slot and three forward slots. In this system, communications are performed according to the CDMA/TDD system, each subframe is assigned for a different user and all frames are divided using subframes according to the TDMA structure.

In forward link, the base station apparatus transmits broadcast channel signal 16 to all users. This broadcast channel signal includes forward link transmission power information and reverse link interference power information, so that the mobile station apparatus receives these information to use a measurement of SIR in forward link.

As illustrated in FIG.4, broadcast channel signal 16 is provided at all forward slots over the entire of one frame. In the case of user #1, broadcast channel signal 16 is also transmitted in forward link slot 15 which is present before assigned four slots 11, 12, 13 and 14. The mobile station apparatus dose not monitor SIR of the traffic channel signal, but measures SIR of broadcast channel signal 16 at slot 15 positioning immediately before reverse link 11, so that the mobile station recognizes immediately previous channel conditions. Further, as the measurement methods, a received power level of the broadcast channel signal may be measured instead of SIR. The SIR measurement or received power level measurement may be performed also using the traffic channel signal. The mobile station apparatus performs the transmission power control for signals in reverse link slot 11 corresponding to the measurement result, while inserting the TPC bit to reverse link slot 11 in order to be used for closed-loop transmission power control using SIR for forward link in the base station apparatus.

Thus, in the case where an interval of a forward link slot and a following reverse link slot becomes long in the TDMA structure, the mobile station apparatus is capable of performing transmission power control with high accuracy by monitoring a broadcast channel signal at an appropriate timing, and the base station apparatus is capable of performing transmission power control and base station transmission diversity with high accuracy. Further, since the mobile station apparatus has a CDMA demodulator for despreading a signal of control channel (broadcast channel), the mobile station apparatus is capable of monitoring the signal of control channel (broadcast channel) more assuredly.

On the other hand, the base station apparatus performs closed-loop transmission power control in forward link slots 12, 13 and 14 by demodulating the TPC bit transmitted in reverse link slot 11.

Thus, it is possible to combine open-loop transmission power control in reverse link and closed-loop transmission power control in forward link to achieve the transmission power control. Therefore, it is possible to perform transmission power control appropriate enough for both reverse link and forward link even in the case where fading varies rapidly, thereby enabling transmission power control accuracy to be further improved.

A broadcast channel signal is transmitted in forward link from the base station apparatus. However, it is not necessary to transmit the broadcast channel signal in all slots in forward link. When the broadcast channel signal is transmitted at least in a slot immediately before a reverse link slot, it is possible to provide sufficient transmission power control to the mobile station apparatus of the present invention.

In addition, it is possible to insert information, such as forward link transmission power information and reverse link interference power information, to the broadcast channel signal. Therefore, the use of the broadcast channel signal enables the mobile station apparatus to combine the open-loop power control by measuring a power level of a received signal as previously described and closed-loop power control. For example, a base station apparatus inserts information indicative of transmission power of broadcast channel signal to the broadcast channel signal. A mobile station apparatus acquires the forward link power information using the broadcast channel signal, and obtains a difference between a base station transmitted broadcast channel power level and an actually transmitted power level, thus enabling the mobile station to estimate channel conditions with high accuracy. Such processing may be combined with the closed-loop power control which uses, for example, TPC information received from the base station.

Specifically, the transmission power of a mobile station apparatus (Tms) in the case of performing such a control is obtained using, for example, an equation as follows:

$$Tms=(Pbts+Ptpc)+(Tbts-Rms)$$

where Pbts is target received power in a base station apparatus, Ptpc is corrected power corresponding to TPC bit of closed-loop power control from the base station apparatus, Tbts is (estimated) transmission power of base station apparatus transmitted broadcast channel signal, and Rms is received power of broadcast channel signal in the mobile station apparatus.

In other words, the mobile station apparatus performs the closed-loop power control in reverse link using the target received power in the base station apparatus (Pbts) and the corrected power based on the TPC bit obtained in forward link (Ptpc), while obtains a difference between estimated transmission power of base station transmitted broadcast channel signal (Tbts) and received power of the broadcast channel signal so as to add to the transmission power.

Information on the estimated transmission power of base station transmitted broadcast channel signal (Tbts) is inserted to forward link from the base station, and the broadcast channel signal is transmitted at least in a forward link slot positioning immediately before a transmission slot in reverse link. In other words, the base station apparatus is controlled to transmit the broadcast channel signal to which transmission power information is inserted at such a timing.

Since the mobile station thus performs transmission power control by combining the open-loop power control and the closed-loop power control, the accuracy of the transmission power control is further improved.

In addition, this embodiment describes about an example of a system where asymmetry transmission is performed using one reverse slot and three forward slots. However, it may be possible to design the assignment of slots for forward link and reverse link flexibility depending on a system. For example, it may be possible to assign first to fourth slots respectively to reverse link, forward link, reverse link and forward link, or to reverse link, reverse link, forward link and forward link.

When the transmission diversity in a base station apparatus is considered, it is preferable to assign at least a head slot of each subframe to reverse link and further at least a final slot of each subframe to forward link. This is because the base station apparatus needs a reverse link slot signal from a user assigned to the subframe before transmitting a forward link slot to the user in order to perform transmission diversity in forward link. Since the assignment is performed in such a manner that the head slot of each subframe is always used in reverse link and the final slot of each subframe is always used in forward link, the mobile station apparatus can monitor a broadcast channel signal in a forward link slot immediately before a reverse link slot, and the base station apparatus can perform the transmission diversity using received signals from the mobile station apparatus assuredly.

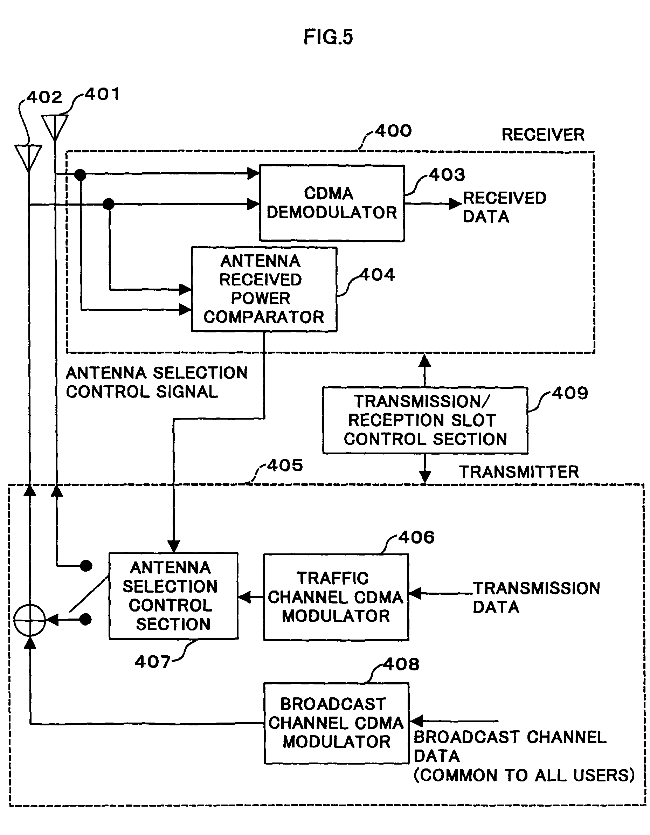

The base station apparatus for performing such transmission diversity is explained using FIG.5. FIG.5 is a schematic block diagram illustrating an example of a configuration of a base station apparatus in a communication system using multiple access communication apparatuses.

This base station apparatus is principally composed of a plurality of antennas, such as, 401 and 402, receiver 400, transmitter 405 and transmission/reception slot controlling section 409.

Receiver 400 has CDMA demodulator 403, and antenna received power comparator 404. Transmitter 405 has traffic channel CDMA modulator 406 and broadcast channel CDMA demodulator 408, which is common to all users, and antenna selection control section 407. Transmission/reception slot control section 409 adjusts transmission slots and received slots respectively for transmitter 400 and receiver 405.

Signals received at antenna 401 and antenna 402 are input to CDMA demodulator 403 to demodulate data, and also input to antenna received power comparator 404, provided in parallel to CDMA demodulator 403, to monitor. Antenna received power comparator 404 outputs an antenna control signal to antenna selection control section 407 so that an antenna under the best channel condition is selected.

Transmission data is modulated at traffic channel CDMA modulator 406, input to antenna selection control section 407, and transmitted from antennas 401 and 402. Corresponding to the antenna selection control signal input from antenna received power comparator 404, transmission power for each antenna is controlled, and thereby the selection between transmission antennas for respective users is controlled. The comparison of received power at each antenna is performed by measuring received level of the traffic channel signal in reverse slot 11 illustrated in FIG.4. to compare. The measurement result is reflected in the transmission of traffic channel signals in slots 12, 13 and 14. While, a broadcast channel signal is modulated in broadcast channel CDMA modulator 408 and transmitted from the antenna in the same way as traffic channel signal. However, the antenna selection control is not performed for the broadcast channel signal.

In addition, there has been proposed a system applying a CDMA/TDD system in Joint-Detection system. In this system, open-loop transmission power control is performed in forward link based on a reverse signal received in a base station apparatus. In the transmission power control of the present invention, it is possible to perform open-loop transmission power control in reverse link using the broadcast channel signal, and also perform open-loop transmission power control in forward link using the reverse link traffic channel signal subjected to the transmission power control. Therefore, the present invention is applicable to the system applying CDMA/TDD system in Joint-Detection system.

In addition, system designs and modifications are facilitated by that the assignment in a subframe is fixed in such a manner that the head slot is assigned for reverse slot and the final slot is assigned for forward slot, and that a broadcast channel signal is transmitted only in the final slot for forward link. In other words, since it is enough for the base station apparatus to transmit a broadcast channel signal only in a specific slot, it is possible to change a slot assignment of each subframe easily, thereby enabling the system to be designed flexibly.

For example, according to the present invention, it is possible to correspond to both a system in which symmetry transmission is performed and another system in which asymmetry transmission is performed by fixing a slot for a broadcast channel signal and changing the assignment for forward slots and reverse slots. Further, it is possible to apply the present invention to a public network system with high generality in which frame configurations are standardized. Furthermore, according to the present invention, it is possible to easily correspond to a system in which a slot assignment is different for every subframe or in which each mobile station is controlled to belong to a specific base station.

As described above, according to the mobile station communication apparatus, base station communication apparatus, and radio communication method of the present invention, it is possible in the CDMA/TDD system with TDMA structure to perform base station transmission diversity and transmission power control with high accuracy, and to follow propagation path variations of both forward link and reverse link even when fading varies rapidly, thereby resulting in improved communication qualities.

The present invention is not limited to the above described embodiments, and various variations and modifications may be possible without departing from the scope of the present invention.

This application is based on the Japanese Patent Applications No.HEI10-027711 filed on January 26, 1998 and No.HEI10-252991 filed on September 7, 1998, entire contents of which are expressly incorporated by reference herein.

**Claims**

1. A mobile station communication apparatus comprising:

   communication control means(110) for performing a communication in a CDMA/TDD system with a TDMA structure with a base station communication apparatus using a subframe having a plurality of slots;
   received quality measurement means(104) for measuring a quality of a broadcast channel signal in forward link which is received immediately before transmitting a traffic channel signal in reverse link; and reverse link transmission power control means(109) for
   controlling transmission power in reverse link based on the measurement result in said received quality measurement means.

2. A mobile station communication apparatus comprising:

   communication control means(110) for performing a communication in a CDMA/TDD system with a TDMA structure with a base station communication apparatus using a subframe having a plurality of slots;
   CDMA demodulation means(102,103) for receiving both a traffic channel signal and a broadcast channel signal transmitted from the base station communication apparatus in forward link to respectively despread with different spreading codes;

received quality measurement means(104) for measuring a quality of the broadcast channel signal in forward link which is received immediately before transmitting a reverse link signal, after said CDMA demodulation means demodulates said broadcast channel signal;

reverse link transmission power control means(109) for controlling transmission power in reverse link based on the measurement result in said received quality measurement means.

3. The mobile station communication apparatus according to claim 1, wherein said communication control means(110) uses a first slot in forward link and a final slot in reverse link in a subframe.

4. The mobile station communication apparatus according to claim 1, wherein said apparatus further comprises forward link TPC bit generating means(106) for generating a TPC bit, which is used in transmission power control in the base station communication apparatus , based on the measurement result in said received quality measurement means.

5. A base station communication apparatus comprising:

communication control means(208) for performing a communication in a CDMA/TDD system with a TDMA structure with a mobile station communication apparatus using a subframe having a plurality of slots;

broadcast channel signal transmission means(206) for transmitting a broadcast channel signal, common to all users, in forward link;

reception means(202) for receiving in reverse link a signal subjected to transmission power control based on a received quality of said broadcast channel signal; and

transmission power control means(207) for controlling transmission power of transmission data in forward link.

6. The base station communication apparatus according to claim 5, wherein said communication control means(208) uses a first slot in forward link and a final slot in reverse link in a subframe.

7. The base station communication apparatus according to claim 5, wherein said broadcast channel signal transmission means(206) transmits a broadcast channel signal only in a specific slot in forward link.

8. The base station communication apparatus according to claim 5, wherein said transmission power control means(207) acquires TPC information, which is generated in the mobile station communication apparatus based on the received quality of said broadcast channel signal, from a traffic channel signal in reverse link, and based on the acquired TPC information, controls transmission power in forward link.

9. The base station communication apparatus according to claim 5, wherein said transmission power control means(207) controls transmission power in forward link based on a quality of a signal received in said reception means.

10. A radio communication method in which a base station communication apparatus and a mobile station communication apparatus each comprises communication control means for performing a communication in a CDMA/TDD system with a TDMA structure mutually using a subframe having a plurality of slots, said method comprising the steps of:

transmitting in said base station communication apparatus data using a traffic channel, while transmitting a broadcast channel signal common to all users using a broadcast channel;

measuring in said mobile station communication apparatus a quality of said broadcast channel signal which is received in forward link immediately before transmitting a reverse link signal, after said broadcast channel signal is CDMA demodulated, and based on the measurement result, performing transmission power control, while inserting a TPC bit to a traffic channel signal to transmit in forward link; and performing, in said base station communication apparatus which receives said traffic channel signal, transmission power control based on the acquired TPC bit.

11. A radio communication method comprising the steps:

providing both a base station communication apparatus and a mobile station communication apparatus with communication control means for performing a communication in a CDMA/TDD system with a TDMA structure mutually using a subframe having a plurality of slots;

performing in said mobile station communication apparatus open loop power control based on a received quality of a broadcast channel signal received immediately before transmitting a reverse link signal, while generating a forward link TPC bit based on the received quality of said broadcast channel signal; and

performing in said base station communication apparatus closed loop power control based on the received TPC bit.

1 FRAME

S1 S2 S3 S4

USER #1

TIME

S1 S2 S3 S4

USER #1

BASE STATION
TRANSMISSION DIVERSITY
IS APPLICABLE

OPEN-LOOP TRANSMISSION
POWER CONTROL IS
NOT APPLICABLE

PRIOR ART
FIG.1A

1 FRAME

S1 S2 S3 S4

USER #1

TIME

S1 S2 S3 S4

USER #1

OPEN-LOOP TRANSMISSION
POWER CONTROL IS
APPLICABLE

BASE STATION
TRANSMISSION DIVERSITY
IS NOT APPLICABLE

PRIOR ART
FIG.1B

## FIG.2

**101**

**100**

RECEIVER

TRAFFIC CHANNEL CDMA DEMODULATOR **102** → RECEIVED DATA

BROADCAST CHANNEL CDMA DEMODULATOR **103** → SIR MEASURING SECTION **104**

FORWARD LINK CLOSED-LOOP TRANSMISSION POWER CONTROL SIGNAL

TRANSMISSION / RECEPTION SLOT CONTROL SECTION **110**

**105**

TRANSMITTER

REVERSE LINK OPEN-LOOP TRANSMISSION POWER CONTROL SIGNAL

FORWARD LINK TPC BIT GENERATING SECTION **106**

TRANSMISSION DATA

TRANSMISSION POWER CONTROL SECTION **109** ← CDMA MODULATOR **108** ← SLOT CONSTRUCTION SECTION

**107**

## FIG.3

RECEIVER

201

200

202 CDMA DEMODULATOR → RECEIVED DATA

203 FORWARD LINK TPC BIT DEMODULATION SECTION

FORWARD LINK CLOSED-LOOP TRANSMISSION POWER CONTROL SIGNAL

208 TRANSMISSION/ RECEPTION SLOT CONTROL SECTION

TRANSMITTER

204

207 TRANSMISSION POWER CONTROL SECTION

205 TRAFFIC CHANNEL CDMA MODULATOR ← TRANSMISSION DATA

206 BROADCAST CHANNEL CDMA MODULATOR ← BROADCAST CHANNEL DATA (COMMON TO ALL USERS)

# FIG.4

1 FRAME

BROADCAST CHANNEL

15 11 12 13 14 ... 15 11 12 13 14

16 16 16 16 16 16 16 16

USER #1 USER #N USER #1 TIME

OPEN-LOOP TRANSMISSION
POWER CONTROL IS APPLICABLE
AND TPC BIT

CLOSED-LOOP TRANSMISSION
POWER CONTROL USING
SIR IS APPLICABLE

FIG.5

402 401

400 RECEIVER

CDMA DEMODULATOR

403 RECEIVED DATA

ANTENNA RECEIVED POWER COMPARATOR 404

ANTENNA SELECTION CONTROL SIGNAL

TRANSMISSION/ RECEPTION SLOT CONTROL SECTION 409

405 TRANSMITTER

406 TRAFFIC CHANNEL CDMA MODULATOR

TRANSMISSION DATA

ANTENNA SELECTION CONTROL SECTION

407

408 BROADCAST CHANNEL CDMA MODULATOR

BROADCAST CHANNEL DATA (COMMON TO ALL USERS)